# EUROPÄISCHE PATENTSCHRIFT

(11) **EP 2 411 439 B1**
(45) Veröffentlichungstag und Bekanntmachung des Hinweises auf die Patenterteilung: **16.11.2016**
(21) Anmeldenummer: 10703451.4
(22) Anmeldetag: 05.02.2010
(51) Int. Cl.: C08G 18/79, C08J 5/24

(54) **PREPREGS UND DARAUS BEI NIEDRIGER TEMPERATUR HERGESTELLTE FORMKÖRPER**
PREPEGS AND MOLDED BODIES PRODUCED THEREOF AT LOW TEMPERATURE
PRÉIMPRÉGNÉS ET CORPS MOULÉS RÉALISÉS À BASSE TEMPÉRATURE À PARTIR DESDITS PRÉIMPRÉGNÉS

(30) Priorität: 24.03.2009 DE 102009001806
(43) Veröffentlichungstag der Anmeldung: 01.02.2012
(73) Patentinhaber: Evonik Degussa GmbH, 45128 Essen (DE)
(72) Erfinder: SCHMIDT, Friedrich-Georg, 45721 Haltern am See (DE); SPYROU, Emmanouil, 46514 Schermbeck (DE); GRENDA, Werner, 44627 Herne (DE); DE NARDO, Sebastian, 45899 Gelsenkirchen (DE); PLANITZ-PENNO, Sibylle, 58239 Schwerte (DE)
(86) Internationale Anmeldenummer: PCT/EP2010/051416
(87) Internationale Veröffentlichungsnummer: WO 2010/108723

(56) Entgegenhaltungen:
- EP-A1- 1 475 399
- EP-A2- 0 806 444
- EP-A2- 1 334 987
- WO-A1-98/31535
- JP-A- 9 194 764
- US-A- 4 138 372
- US-A- 4 596 835

## Beschreibung

Die Erfindung betrifft Prepregs und daraus bei niedriger Temperatur hergestellte Composite-Bauteile (Formkörper), erhältlich durch die Verwendung pulverförmiger hochreaktiver Urediongruppen haltigen Polyurethanzusammensetzungen mit speziellen Katalysatoren.

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten auch bei Raumtemperatur auch eine Möglichkeit die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt.
Polyurethan-Composites weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composites auf der Basis von Epoxy-Systemen werden zum Beispiel beschrieben in WO 98/50211, US 4,992,228, US 5,080,857, US 5,427,725, GB 2007676, GB 2182074, EP 309 221, EP 297 674, WO 89/04335, US 5,532,296 und US 4,377,657, US 4,757,120.

In der WO 2006/043019 wird ein Verfahren zur Herstellung von Prepregs auf der Basis von Epoxidharz-Polyurethanpulvern beschrieben.

Des Weiteren sind Prepregs auf der Basis von pulverförmigen Thermoplasten als Matrix bekannt.

In der US 2004/0231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inherente Zähigkeit, ein gutes viscoelastische Dämpfungsverhalten, eine unbegrenzte Lagerfähigkeit, gute Chemikalienbeständigkeit und Recyclierbarkeit.

In der WO 98/31535 wird eine Methode zur Pulverimprägnierung beschrieben, bei der die zu imprägnierenden Glas- oder Kohlefaserstränge mit einer Partikel/Flüssigkeits- bzw. Partikel/Gas-Mischung in einem definierten Geschwindigkeitsprofil beaufschlagt werden. Dabei bestehen die Pulver aus keramischen bzw. thermoplastischen Materialien, unter anderem thermoplastisches Polyurethan.

In der WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Themoplasten und einem reaktiven Monomer bzw. Prepolymeren besteht.

Die WO 2005/091715 und US-A-4596835 beschreiben ebenfalls die Verwendung von Thermoplasten zur Herstellung von Prepregs.

Michaeli et al. beschreibt die Entwicklung einer Pulvertechnologie für einen Pultrusionsprozess mit Thermoplastischen Polyurethanen, TPU genannt, in Coatings & Composite Materials, Nr.19 , p37 - 39, 1997.

Weiterhin werden in dem Artikel Processing and properties of thermoplastic polyurethane prepreg. (Ma, C. C. M.; Chiang, C. L. Annual Technical Conference - Society of Plastics Engineers (1991), 49th 2065-9.) Thermoplastische Polyurethan (TPU) Prepregs auf Basis von Lösemitteln und Wasser enthaltenden TPU-Systemen offenbart.

Prepregs mit einer Matrix auf der Basis von 2-Komponenten-Polyurethanen (2-K-PUR) sind bekannt.

Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat ist, sind dies bei der zweiten Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyadition unter Bildung eines Netzwerkes aus Polyurethan bzw. Polyharnstoff.

2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212].

Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Im Folgenden folgt eine Beschreibung der Polyurethan-Prepregs bzw. -Composite auf der Basis von 2-K-PUR-Systemen.

In dem Artikel von K.Recker wird über die Entwicklung eines 2-K-Polyurethansystems für das Harzmattenverfahren unter besonderer Berücksichtigung der Verarbeitungseigenschaften für SMC-Bauteile berichtet. (Baypreg - ein neuer POLYURETHAN-Werkstoff für das Harzmattenverfahren , Recker, Klaus, Kunststoffe-Plastics 8,1981).

Die WO 2005/049301 offenbart ein katalytisch aktiviertes 2-K-PUR-System, wobei die Polyisocyanat-Komponente und das Polyol gemischt werden und mittels Pultrusion zu einem Composite verarbeitet werden.

In der WO 2005/106155 werden faserverstärkte Composites für die Bau-Industrie offenbart, die mittels der Long-Fiber-Injection (LFI) Technologie mit 2-K-Polyurethan-Systemen hergestellt werden.

In der JP 2004196851 werden Composites beschrieben, die aus Carbonfasern und organischen Fasern, wie z. B. Hanf, unter Verwendung einer Matrix aus 2-K-PUR auf der Basis von polymeren Methylendiphenyldiisocyanat (MDI) und speziellen OH-Gruppen haltigen Verbindungen hergestellt werden.

Die EP 1 319 503 beschreibt Polyurethan-Composites, wobei spezielle Polyurethan-Deckschichten für ein mit einem 2K-PUR-Harz getränktes Faser-Laminat, das eine Kernschicht (z. B. eine Papierwabe) umhüllt, verwendet werden. Das 2K-PUR-Harz besteht z.B. aus MDI und einer Mischung aus Polypropylentriolen und Diolen von Ethylenoxid-Propylenoxid-Copolymeren.
In der WO 2003/101719 werden Polyurethanbasierte Composites und die Methoden zur Herstellung beschrieben. Es handelt sich um 2-K-Polyurethanharze mit definierten Viskositäten und bestimmten Gelzeiten.

2-K-PUR-Systeme werden ebenfalls abgehandelt in: "Fiber reinforced polyurethane composites: shock tolerant components with particular emphasis on armor plating" (Ratcliffe, Colin P.; Crane, Roger M.; Santiago, Armando L., AMD (1995), 211 (Innovative Processing and Characterization of Composite Materials), 29-37.) und in Fiber-reinforced polyurethane composites. I. Process feasibility and morphology. (Ma, Chen Chi M.; Chen, Chin Hsing. International SAMPE Symposium and Exhibition (1992), 37 (Mater. Work. You 21 st Century), 1062-74.)

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.
Bekannt sind auch physikalisch trocknende Systeme auf der Basis von nichtreaktiven PUR-Elastomeren. Es handelt sich hierbei um höhermolekulare, lineare, thermoplastische Urethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich.

Bei der Herstellung von Prepregs mit Faserverbunden ist der Einsatz von Pulvern bei reaktiven Systemen eher unüblich und beschränkt sich bislang auf wenige Einsatzgebiete. Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen.
Dieses Verfahren wird in der EP 590 702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht auseinander gezogen werden.
Diesbezüglich wird in der US 20040231598 eine Methode vorgestellt, die ähnlich dem Wirbelbettverfahren funktioniert. Dabei transportiert ein Luftstrom die Partikel zum Substrat und es erfolgt durch einen speziellen Aufbau eine gleichmäßige Abscheidung des Pulvers.
Ein weiteres Verfahren beschreibt die, US 20050215148. Dort werden mit der eben erwähnten Vorrichtung gleichmäßige Verteilungen des Pulvers auf der Faser erreicht. Die Partikelgröße reicht dabei von 1 bis 2000 µm. Beschichtet wird bei mehreren Versuchen von einer oder von zwei Seiten. Durch die gleichmäßige Aufbringung des Pulvers werden nach einem anschließenden Verpressen der Prepregs Laminate ohne Lufteinschlüsse erzeugt.
Eine weitere Anmeldung, WO 2006/043019 beschreibt die Anwendung von epoxy- und amino-terminierten Harzen in Pulverform. Dabei werden die Pulver vermischt und auf die Fasern gegeben. Anschließend werden die Partikel angesintert. Die Partikelgröße liegt zwischen 1 und 3000 µm, vorzugsweise aber zwischen 1 und 150 µm.
Diese Einschränkung der Partikelgröße auf eher kleine Durchmesser wird auch in einer Studie der Michigan State University empfohlen. Dabei ist die Theorie, dass Partikel mit kleinen Durchmessern eher in Hohlräume zwischen einzelnen Filamenten eindringen können als Partikel mit großen Durchmessern (S. Padaki, L.T. Drzal: a simulation study on the effects of particle size on the consolidation of polymer powder impregnated tapes, Department of Chemical Engineering, Michigan State University, Composites: Part A (1999), pp. 325-337).

Neben der Prepregtechnik werden auch in anderen klassischen Verfahren reaktive Pulver-Systeme eingesetzt, so beispielsweise in der Wickeltechnik [M.N. Ghasemi Nejhad, K.M. Ikeda: Design, manufacture and characterization of composites using on-line recycled thermoplastic powder impregnation of fibres and in-situ filament winding, Department of Mechanical Engineering, University of Hawaii at Manoa, Journal of Thermoplastic Composite Materials, Vol 11, pp. 533-572, November 1998] oder beim Pultrusionsverfahren. Für das Pultrusionsverfahren werden beispielsweise Faserseile (Towpregs) mit dem Pulver beschichtet und zunächst als sogenannte Towpregs aufgewickelt und gelagert. Eine Möglichkeit zur Herstellung ist in einem Artikel des SAMPE Journal's beschrieben [R.E. Allred, S. P. Wesson, D. A. Babow: powder impregnation studies for high temperature towpregs, Adherent Technologies, SAMPE Journal, Vol. 40, No. 6, pp. 40-48, November/ December 2004]. In einer weiteren Untersuchung wurden solche Towpregs durch das Pultrusionsverfahren zusammen gepresst und ausgehärtet zu Werkstoffbauteilen [N.C. Parasnis, K. Ramani, H.M. Borgaonkar: Ribbonizing of electrostatic powder spray impregnated thermoplastic tows by pultrusion, School of Mechanical Engineering, Purdue University, composites, Part A, Applied science and manufacturing, Vol. 27, pp. 567-574, 1996]. Obwohl die Herstellung von Towpregs und anschließende Verpressung im Pultrusionsverfahren bereits mit duroplastischen Systemen durchgeführt wurde, werden bei diesem Verfahren bislang größtenteils nur thermoplastische Systeme eingesetzt.

Die Aufgabe war es, ein problemlos zu handhabendes, das heißt nicht toxisches, polyurethanbasierendes Prepreg-System zu finden, das weder die hohen Viskositäten der thermoplastische Polyurethan-Systeme und damit die schwierige Faser- bzw. Gewebe-Durchtränkung noch die kurzen Verarbeitungszeiten von 2-K-Polyurethan-Systemen aufweist. Weitere Aufgabe dieser Erfindung war es daher, Prepregs mit Polyurethan-Matrixmaterial zu finden, welche mit einem einfachen Verfahren hergestellt werden können, wobei das Hauptaugenmerk auf das Handling und die Lagerungsfähigkeit der Prepregs gelegt werden sollte.

Für die erfindungsgemäßen Prepregs ist es vorteilhaft, wenn die Viskosität der unvernetzten Matrix-Materialien gering genug ist, um bei der Herstellung des Composite-Bauteils eine Benetzung des Faser förmigen Trägers zu gewährleisten, wobei auch eine Thixotropie vorteilhaft sein kann, damit ein Abfließen des Harzes in senkrechten Bauteilsegmenten verhindert werden kann.
Durch die Wahl geeigneter Ausgangsstoffe zu Herstellung der Matrixmaterialien kann eine genügend lange Verarbeitungszeit (abhängig von der jeweiligen Anwendung bei der Herstellung der Composite) zwischen dem Aufschmelzen der nicht ausreagierten Matrixmaterial und der Vollendung der Reaktion gewährleistet werden.

Überraschend wurde nun gefunden, dass sich mit hochreaktiven, das heißt bei Temperaturen unterhalb von 160 °C aushärtbaren pulverförmigen Urediongruppen haltigen Polyurethanzusammensetzungen lagerstabile, aber noch reaktive und somit bei der Composite-Bauteil-Herstellung vernetzbare Polyurethan basierende Prepregs herstellen lassen, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß enthaltenen hochreaktiven pulverförmigen Urediongruppen haltigen Polyurethanzusammensetzungen sind umweltfreundlich, weisen gute mechanische Eigenschaften auf, lassen sich einfach verarbeiten und zeichnen sich nach Härtung bei Temperaturen unter 160 °C durch eine gute Wetterbeständigkeit wie durch ein ausgewogenes Verhältnis zwischen Härte und Flexibilität aus.

Gegenstand der Erfindung sind Prepregs, im Wesentlichen aufgebaut aus
A) mindestens einem Faser förmigen Träger
   und
B) mindestens einer hochreaktiven pulverförmigen Uretdiongruppen haltigen Polyurethanzusammensetzung als Matrixmaterial, im Wesentlichen enthaltend
   a) mindestens einen Uretdiongruppen haltigen Härter
      und
   b) optional mindestens ein Polymer mit gegenüber NCO-Gruppen reaktiven funktionellen Gruppen;
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
      und
   d) 0,1 bis 5 Gew.-% mindestens einen Co-Katalysator, ausgewählt aus
      d1) mindestens einem Epoxid
         und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe.

Bevorzugter Gegenstand der vorliegenden Erfindung sind Prepregs im Wesentlichen aufgebaut aus
A) mindestens einem Faser förmigen Träger
   und
B) mindestens einer hochreaktiven pulverförmigen Uretdiongruppen haltigen Polyurethanzusammensetzung als Matrixmaterial, im Wesentlichen enthaltend
   a) mindestens einen Uretdiongruppen haltigen Härter, basierend auf Polyadditionsverbindungen aus aliphatischen, (cyclo)aliphatischen oder cycloaliphatischen Uretdiongruppen enthaltenen Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
   b) mindestens ein hydroxylgruppenhaltiges Polymer, das unterhalb von 40 °C in fester Form und oberhalb von 125 °C in flüssiger Form vorliegt und einer OH-Zahl zwischen 20 und 200 mg KOH / Gramm;
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
      und
   d) 0,1 bis 5 Gew.-% mindestens einen Co-Katalysator, ausgewählt aus
      d1) mindestens einem Epoxid
         und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,6 bis 0,9.
Letzteres entspricht einem NCO/OH-Verhältnis von 0,6 bis 2 zu 1 bzw. 1,2 bis 1,8 zu 1.

Die erfindungsgemäßen Prepregs weisen eine sehr hohe Lagerstabilität bei Raumtemperatur auf, wobei das Matrixmaterial einen Tg von mindestens 40 °C aufweist. Diese beträgt je nach enthaltener hochreaktiver pulverförmiger Polyurethanzusammensetzung mindestens einigen Tage oder Wochen bei Raumtemperatur, aber in der Regel sind die Prepregs einige Tage bei 40 °C und darunter lagerstabil.

Die Prepregs sind nach dem Applizieren und Fixieren, bevorzugt durch thermische Behandlung, bevorzugt durch Ansintern der hochreaktiven pulverförmigen Polyurethanzusammensetzung ohne jedoch zu vernetzen, nicht klebrig und daher sehr gut zu handhaben und weiter zu verarbeiten. Die erfindungsgemäß eingesetzten hochreaktiven pulverförmigen Urediongruppen haltigen Polyurethanzusammensetzungen weisen demnach eine sehr gute Haftung und Verteilung auf dem Faser förmigen Träger auf.
Während der Weiterverarbeitung der Prepregs zu Composites (Verbundwerkstoffen) z. B. durch Verpressen bei erhöhten Temperaturen, erfolgt eine sehr gute Imprägnierung des Faser förmigen Trägers, dadurch bedingt, dass die dabei flüssig niedrig viskosen reaktiven Urediongruppen haltigen Polyurethanzusammensetzungen vor der Vernetzungsreaktion die Faser des Trägers sehr gut benetzen, bevor durch die Vernetzungsreaktion der hochreaktiven Polyurethanzusammensetzung bei erhöhten Temperaturen eine Vergelung eintritt beziehungsweise die komplette Polyurethanmatrix durchhärtet.

Je nach Zusammensetzung der verwendeten hochreaktiven pulverförmigen Urediongruppen haltigen Polyurethanzusammensetzung und zugesetzten Katalysatoren können sowohl die Geschwindigkeit der Vernetzungsreaktion bei der Herstellung der Composite-Bauteile als auch die Eigenschaften der Matrix in weiten Bereichen variiert werden.
Als Matrixmaterial wird im Rahmen der Erfindung die zur Herstellung der Prepregs eingesetzte hochreaktive pulverförmige Polyurethanzusammensetzung definiert und bei der Beschreibung der Prepregs die auf der Faser fixierte beziehungsweise haftende, noch hochreaktive Polyurethanzusammensetzung. Die Matrix ist definiert als die im Composite vernetzten Matrixmaterialien aus den hochreaktiven pulverförmigen Urediongruppen haltigen Polyurethanzusammensetzungen.

### Träger

Der Faser förmige Träger in der vorliegenden Erfindung besteht aus Faser förmigem Material (auch häufig Verstärkungsfasern genannt). Im Allgemeinen ist jegliches Material, aus dem die Fasern bestehen, geeignet, bevorzugt wird jedoch Faser förmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen Faser förmigen Trägern herstellbar.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).

Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung.

Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern).

Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul ist deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex^{®} und Kevlar^{®} von DuPont, oder Teijinconex^{®}, Twaron^{®} und Technora^{®} von Teijin. Besonders geeignet und bevorzugt sind Träger aus Glasfasern, Kohlenstofffasern, Aramidfasern oder keramische Fasern.

Bei dem Faser förmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als Faser förmiger Träger geeignet.
Einen Überblick über Verstärkungsfasern enthält "Composites Technologien, Paolo Ermanni (Version 4), Script zur Vorlesung ETH Zürich, August 2007, Kapitel 7.

### Matrixmaterial

Geeignete pulverförmige hochreaktive Urediongruppen haltige Polyurethanzusammensetzungen enthalten erfindungsgemäß Mischungen aus temporär deaktivierten, das heißt Uretdiongruppen haltigen (intern blockierte) Di- oder Polyisocyanaten, auch als Härter a) bezeichnet, und den erfindungsgemäß enthaltenen Katalysatoren c) und d) und optional zusätzlich ein funktionelle Gruppen - reaktiv gegenüber NCO-Gruppen - aufweisendes Polymer (Binder), auch als Harz b) bezeichnet. Die Katalysatoren gewährleisten eine Aushärtung der Urediongruppen haltigen Polyurethanzusammensetzungen bei Niedrigtemperatur. Die Urediongruppen haltigen Polyurethanzusammensetzungen sind somit hochreaktiv.

Urediongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Geeignet sind Di- und Polyisocyanate aus beliebigen aliphatischen, cycloaliphatischen und/oder (cyclo)aliphatischen Di- und/oder Polyisocyanaten.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI). Ganz besonders bevorzugt werden IPDI, HDI, TMDI und H₁₂MDI eingesetzt, wobei auch die Isocyanurate einsetzbar sind.

Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexylisocyanat, 2,4'-Methylen-bis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und HDI.

Ganz besonders bevorzugt wird für das Matrixmaterial IPDI und HDI verwendet.

Die Umsetzung dieser Uretdiongruppen enthaltenen Polyisocyanate zu Uretdiongruppen aufweisenden Härtern a) beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder nieder-molekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524). Bevorzugt werden Polyester und monomere Dialkohole. Bevorzugte Uretdiongruppen aufweisende Härter a) haben einen freien NCO-Gehalt von weniger als 5 Gew.-% und einen Gehalt an Uretdiongruppen von 3 bis 25 Gew.-% bevorzugt von 6 bis 18 Gew.-% (berechnet als C₂N₂O₂, Molekulargewicht 84). Außer den Uretdiongruppen können die Härter auch Isocyanurat-, Biuret-, Allophanat-, Urethan- und/oder Harnstoff-Strukturen aufweisen. Die Härter a) liegen unterhalb von 40 °C in fester Form und oberhalb von 125 °C in flüssiger Form vor.

In einer bevorzugten Ausführungsform der Erfindung sind Polymere b) mit gegenüber NCO-Gruppen reaktiven funktionellen Gruppen enthalten.

Als funktionelle Gruppen der Polymeren b) (Binder) sind Hydroxylgruppen, Aminogruppen und Thiolgruppen geeignet, welche mit den freien Isocyanatgruppen unter Addition reagieren und somit die Polyurethanzusammensetzung vernetzt und aushärtet. Die Binderkomponenten müssen einen Festharzcharakter (Glastemperatur größer als die Raumtemperatur) haben. Als Binder sind Polyester, Polyether, Polyacrylate, Polycarbonate und Polyurethane mit funktionellen Gruppen geeignet. Die Menge an den Polymeren b) wird so gewählt, dass auf jede funktionell Gruppe der Komponente b) 0,3 bis 1,0 Uretdiongruppe der Komponente a), bevorzugt 0,6 bis 0,9, entfällt.

Bei den besonders bevorzugten hydroxylgruppenhaltigen Polymeren b) werden bevorzugt Polyester, Polyether, Polyacrylate, Polyurethane und/oder Polycarbonate mit einer OH-Zahl 20 bis 500 mg KOH/g bevorzugt von 20 - 200 in mg KOH/Gramm und einer mittleren Molmasse von 250 bis 6000 g/Mol eingesetzt, die unterhalb von 40 °C in fester Form und oberhalb von 125 °C in flüssiger Form vorliegen, verwendet. Solche Bindemittel sind beispielsweise in EP 669 354 und EP 254 152 beschrieben worden. Besonders bevorzugt werden Polyester oder Polyacrylate mit einer OH-Zahl von 20 bis 150 und einem mittleren Molekulargewicht von 500 bis 6000 g/mol. Selbstverständlich können auch Mischungen solcher Polymere eingesetzt werden. Die Menge an den hydroxylgruppenhaltigen Polymeren b) wird so gewählt, dass auf jede Hydroxylgruppe der Komponente b) 0,3 bis 1,0 Uretdiongruppe der Komponente a), bevorzugt 0,6 bis 0,9, entfällt.

Als Katalysatoren unter c) werden quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat,
Tetramethylammoniumpropionat, Tetramethylammoniumbutyrat,
Tetramethylammonium-benzoat, Tetraethylammoniumformiat,
Tetraethylammoniumacetat, Tetraethylammoniumpropionat,
Tetraethylammoniumbutyrat, Tetraethylammoniumbenzoat,
Tetrapropylammoniumformiat, Tetrapropylammoniumacetat,
Tetrapropylammoniumpropionat, Tetrapropylammoniumbutyrat,
Tetrapropylammoniumbenzoat, Tetrabutylammoniumformiat,
Tetrabutylammoniumacetat, Tetrabutylammoniumpropionat,
Tetrabutylammoniumbutyrat und Tetrabutylammoniumbenzoat und
Tetrabutylphosphoniumacetat, Tetrabutylphosphoniumformiat und
Ethyltriphenylphosphoniumacetat, Tetrabutylphosphoniumbenzotriazolat,
Tetraphenylphosphoniumphenolat und Trihexyltetradecylphosphoniumdecanoat,
Methyltributylammoniumhydroxid, Methyltriethylammoniumhydroxid,
Tetramethylammoniumhydroxid, Tetraethylammoniumhydroxid,
Tetrapropylammoniumhydroxid, Tetrabutylammoniumhydroxid,
Tetrapentylammoniumhydroxid, Tetrahexylammoniumhydroxid,
Tetraoctylammoniumhydroxid, Tetradecylammoniumhydroxid,
Tetradecyltrihexylammoniumhydroxid, Tetraoctadecylammoniumhydroxid,
Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Methyltributylammoniummethanolat,
Methyltriethylammoniummethanolat, Tetramethylammoniummethanolat,
Tetraethylammoniummethanolat, Tetrapropylammoniummethanolat,
Tetrabutylammoniummethanolat, Tetrapentylammoniummethanolat,
Tetrahexylammoniummethanolat, Tetraoctylammoniummethanolat,
Tetradecylammoniummethanolat, Tetradecyltrihexylammoniummethanolat,
Tetraoctadecylammoniummethanolat, Benzyltrimethylammoniummethanolat,
Benzyltriethylammoniummethanolat, Trimethylphenylammoniummethanolat,
Triethylmethylammoniummethanolat, Trimethylvinylammoniummethanolat,
Methyltributylammoniumethanolat, Methyltriethylammoniumethanolat,
Tetramethylammoniumethanolat, Tetraethylammoniumethanolat,
Tetrapropylammoniumethanolat, Tetrabutylammoniumethanolat,
Tetrapentylammoniumethanolat, Tetrahexylammoniumethanolat,
Tetraoctylammoniummethanolat, Tetradecylammoniumethanolat,
Tetradecyltrihexylammoniumethanolat, Tetraoctadecylammoniumethanolat,
Benzyltrimethylammoniumethanolat, Benzyltriethylammoniumethanolat,
Tri-methylphenylammoniumethanolat, Triethylmethylammoniumethanolat,
Tri-methylvinylammoniumethanolat, Methyltributylammoniumbenzylat,
Methyltriethylammoniumbenzylat, Tetramethylammoniumbenzylat,
Tetraethylammoniumbenzylat, Tetrapropylammoniumbenzylat,
Tetrabutylammoniumbenzylat, Tetrapentylammoniumbenzylat,
Tetrahexylammoniumbenzylat, Tetraoctylammoniumbenzylat,
Tetradecylammoniumbenzylat, Tetradecyltrihexylammoniumbenzylat,
Tetraoctadecylammoniumbenzylat, Benzyltrimethylammoniumbenzylat,
Benzyltriethylammoniumbenzylat, Tri-methylphenylammoniumbenzylat,
Triethylmethylammoniumbenzylat, Tri-methylvinylammoniumbenzylat,
Tetramethylammoniumfluorid, Tetraethylammoniumfluorid,
Tetrabutylammoniumfluorid, Tetraoctylammoniumfluorid,
Benzyltrimethylammoniumfluorid, Tetrabutylphosphoniumhydroxid,
Tetrabutylphosphoniumfluorid, Tetrabutylammoniumchlorid,
Tetrabutylammoniumbromid, Tetrabutylammoniumiodid,
Tetraethylammoniumchlorid, Tetraethylammoniumbromid,
Tetraethylammoniumiodid, Tetramethylammoniumchlorid,
Tetramethylammoniumbromid, Tetramethylammoniumiodid,
Benzyltrimethylammoniumchlorid, Benzyltriethylammoniumchlorid,
Benzyltripropylammoniumchlorid, Benzyltributylammoniumchlorid,
Methyltributylammoniumchlorid, Methyltripropylammoniumchlorid,
Methyltriethylammoniumchlorid, Methyltriphenylammoniumchlorid,
Phenyltrimethylammoniumchlorid, Benzyltrimethylammoniumbromid,
Benzyltriethylammoniumbromid, Benzyltripropylammoniumbromid,
Benzyltributylammoniumbromid, Methyltributylammoniumbromid,
Methyltripropylammoniumbromid, Methyltriethylammoniumbromid,
Methyltriphenylammoniumbromid, Phenyltrimethylammoniumbromid,
Benzyltrimethylammoniumiodid, Benzyltriethylammoniumiodid,
Benzyltripropylammoniumiodid, Benzyltributylammoniumiodid,
Methyltributylammoniumiodid, Methyltripropylammoniumiodid,
Methyltriethylammoniumiodid, Methyltriphenylammoniumiodid und
Phenyltrimethylammoniumiodid, Methyltributylammoniumhydroxid,
Methyltriethylammoniumhydroxid, Tetramethylammoniumhydroxid,
Tetraethylammoniumhydroxid, Tetrapropylammoniumhydroxid,
Tetrabutylammoniumhydroxid, Tetrapentylammoniumhydroxid,
Tetrahexylammoniumhydroxid, Tetraoctylammoniumhydroxid,
Tetradecylammoniumhydroxid, Tetradecyltrihexylammoniumhydroxid,
Tetraoctadecylammoniumhydroxid, Benzyltrimethylammoniumhydroxid,
Benzyltriethylammoniumhydroxid, Trimethylphenylammoniumhydroxid,
Triethylmethylammoniumhydroxid, Trimethylvinylammoniumhydroxid,
Tetramethylammoniumfluorid, Tetraethylammoniumfluorid,
Tetrabutylammoniumfluorid, Tetraoctylammoniumfluorid und
Benzyltrimethylammoniumfluorid. Diese Katalysatoren können allein oder in Mischungen zugesetzt werden. Bevorzugt werden Tetraethylammoniumbenzoat und Tetrabutylammoniumhydroxid verwendet.

Der Anteil an Katalysatoren c) kann 0,1 bis 5 Gew.-% betragen, bevorzugt von 0,3 bis 2 Gew.-%, bezogen auf die Gesamtformulierung des Matrixmaterials.

Eine erfindungsgemäße Variante schließt die Anbindung solcher Katalysatoren c) an die funktionellen Gruppen der Polymere b) mit ein. Außerdem können diese Katalysatoren mit einer inerten Hülle umgeben und damit verkapselt sein.

Als Co-Katalysatoren d1) werden Epoxide eingesetzt. In Frage kommen dabei z. B. Glycidylether und Glycidylester, aliphatische Epoxide, Diglycidylether auf Basis Bisphenol A und Glycidylmethacrylate. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden verwendet ARALDIT PT 910 und 912 eingesetzt.

Als Co-Katalysatoren d2) kommen Metallacetylacetonate in Frage. Beispiele dafür sind Zinkacetylacetonat, Lithiumacetylacetonat und Zinnacetylacetonat, allein oder in Mischungen. Bevorzugt wird Zinkacetylacetonat eingesetzt.

Als Co-Katalysatoren d2) kommen ausserdem quarternäre Ammoniumacetylacetonate oder quarternäre Phosphoniumacetylacetonate in Frage.
Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Der Anteil an Co-Katalysatoren d1) und/oder d2) kann von 0,1 bis 5 Gew.-% betragen, bevorzugt von 0,3 bis 2 Gew.-%, bezogen auf die Gesamtformulierung des Matrixmaterials.

Optional können die hochreaktiven pulverförmigen Urediongruppen haltigen Polyurethanzusammensetzungen zusätzliche metallorganischen Katalysatoren, wie z. B. Dibutylzinndilaurat, Zinnoctoat, Bismuthneodecanoat, oder aber tertiäre Amine, wie z. B. 1,4-Diazabicylco[2.2.2.]octan, in Mengen von 0,001 - 1 Gew.-% enthalten.

Für die Herstellung der hochreaktiven pulverförmigen Urediongruppen haltigen Polyurethanzusammensetzungen können die in der Polyurethanchemie üblichen Zusatzstoffe e) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 50 Gew.-% der Gesamtzusammensetzung zugesetzt werden.

Herkömmliche Uretdiongrupen haltige Polyurethanzusammensetzungen lassen sich unter normalen Bedingungen (DBTL-Katalyse) erst ab 160, üblicherweise 180 °C aushärten. (Pieter Gillis de Lange, Powder Coatings and Technology, Vincentz Verlag, 2004, Kap. 3.3.2.2 S. 119)

Mit Hilfe der erfindungsgemäßen eingesetzten hochreaktiven und somit bei Niedrigtemperatur härtenden Polyurethanzusammensetzungen kann bei 100 bis 160 °C Aushärtungstemperatur nicht nur Energie und Aushärtungszeit gespart werden, sondern es lassen sich auch viele Temperatursensible Träger verwenden.

Hochreaktiv bedeutet im Rahmen dieser Erfindung, dass die erfindungsgemäß eingesetzten Uretdiongruppen haltigen Polyurethanzusammensetzungen bei Temperaturen von 100 bis 160 °C, und zwar je nach Art des Trägers aushärten. Bevorzugt beträgt diese Aushärtungstemperatur 120 bis 150 °C, besonders bevorzugt von 130 bis 140 °C. Die Zeit zur Aushärtung der erfindungsgemäß eingesetzten Polyurethanzusammensetzung liegt innerhalb von 5 bis 60 Minuten.

Die erfindungsgemäß eingesetzten hochreaktiven Urediongruppen haltigen Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H₁₂MDI) wird zusätzlich noch eine gute Witterungsbeständigkeit erreicht.

Die erfindungsgemäß als Matrixmaterial verwendeten hochreaktiven pulverförmigen Urediongruppen haltigen Polyurethanzusammensetzungen liegen bei Raumtemperatur in fester pulvriger und nicht klebriger Form vor. Sie enthalten im Wesentlichen eine Mischung aus einem Härter a), den erfindungsgemäßen Katalysatoren und optional aber bevorzugt ein Polymer b) (Harz). Diese Mischung hat einen Tg von mindestens 40 °C und reagiert in der Regel erst oberhalb von 100 °C zu einem vernetzten Polyurethan und bildet somit die Matrix des Composites. Das bedeutet, dass die erfindungsgemäßen Prepregs nach ihrer Herstellung aus dem Träger und der applizierten hochreaktiven pulverförmigen Polyurethanzusammensetzung als Matrixmaterial, welche in unvernetzter aber reaktiven Form vorliegt, aufgebaut sind. Die Prepregs sind also lagerstabil, in der Regel mehrere Tage und sogar Wochen und können somit jederzeit zu Composites weiterverarbeitet werden. Dies ist der wesentliche Unterschied zu den bereits oben beschriebenen 2-Komponenten, die reaktiv und nicht lagerstabil sind, da diese nach dem Aufbringen sofort zu Polyurethanen reagieren und vernetzen.

Die Homogenisierung aller Bestandteile zur Herstellung der Polyurethanzusammensetzung zur Herstellung der Prepregs kann in geeigneten Aggregaten, wie z. B. beheizbaren Rührkesseln, Knetern, oder auch Extrudern, erfolgen, wobei Temperaturobergrenzen von 120 bis 130 °C bei kurzen Verweilzeiten nicht überschritten werden sollten. Die Mischung der einzelnen Komponenten erfolgt bevorzugt in einem Extruder bei Temperaturen, die zwar oberhalb der Schmelzbereiche der einzelnen Komponenten liegen, aber unterhalb der Temperatur, bei der die Vernetzungsreaktion startet. Die entstandenen erstarrten Massen werden vermahlen und können z. B. durch Siebung in verschiedene Fraktionen aufgetrennt werden (z. B. Durchmesser der Partikel < 63 µm, 63 - 100µm, >100µm).

Gegenstand der Erfindung ist auch die Verwendung der erfindungsgemäßen hochreaktiven pulverförmigen Polyurethanzusammensetzung B) zur Herstellung von Prepregs, insbesondere mit Faser förmigen Trägern (Faserverstärkungen) aus Glas-, Kohle- oder Aramid-Fasern und die daraus hergestellten Composites.

Die Herstellung der Prepregs kann im Prinzip nach beliebigen Verfahren bevorzugt durch Pulverimprägnierung erfolgen. Geeigneter Weise wird dabei die hochreaktive pulverförmige Polyurethanzusammensetzung durch ein Streuverfahren auf den Träger aufgebracht. Möglich sind auch Wirbelsinterverfahren, Pultrusion, oder Sprühverfahren.

Bei der Pulverimprägnierung liegt das Matrixmaterial - normalerweise Thermoplast - Polymer in Pulverform vor. Um nur möglichst kurze Fließwege der hochviskosen Schmelze von thermoplastischen Matrixsystemen zur Benetzung und Umhüllung der Fasern zu ermöglichen, ist es gemäß des Standes der Technik üblich, dass im Wirbelbettverfahren das Thermoplastpulver in strömender Luft dispergiert und das Filamentgam im Luftstrom gespreizt wird. Damit können die einzelnen Pulverpartikel bis zu den Einzel-Fasern gebracht werden. Durch elektrostatische Aufladung des Pulvers kann das Anhaften des Pulvers zusätzlich verbessert werden. Nach dem Durchlaufen des Wirbelbettes wird das Filamentgam mit dem leicht anhaftenden Pulver durch eine Heizstrecke geführt, in dem das Matrixpolymerpulver angeschmolzen wird. Im Anschluss muss ein Konsolidierungsschritt bei der Herstellung der Composite-Bauteile die Benetzung der Filamente vervollständigen.

Bei der erfindungsgemäßen Verwendung der erfindungsgemäßen hochreaktiven pulverförmigen Polyurethanzusammensetzung sind derartige Verfahren zur Fließwegverkürzung nicht unbedingt notwendig, da die Schmelze der Präpolymere (unvernetzte Pulverlackschmelze) eine geeignet niedrige Viskosität besitzt, um die Faserbenetzung zu ermöglichen, was einen erheblichen Vorteil der erfindungsgemäßen Prepregs gegenüber dem Stand der Technik darstellt.

Das Pulver (gesamt oder eine Fraktion) wird bevorzugt über Streuverfahren auf den Faser förmigen Träger, z. B. auf Bahnen aus Glas-, Kohle-, oder Aramid-Fasergelege/-gewebe, aufgebracht und anschließend fixiert. Zur Vermeidung von Pulververlusten wird bevorzugt direkt nach dem Streuvorgang in einer Heizstrecke (z. B. mit IR-Strahlern) der mit Pulver beaufschlagte Faser förmige Träger erwärmt, sodass ein Ansintern der Partikel erfolgt, wobei Temperaturen von 80 bis 100 °C nicht überschritten werden sollten, um ein Anreagieren des hochreaktiven Matrixmaterials zu verhindern. Diese Prepregs können je nach Bedarf zu unterschiedlichen Formen kombiniert und zugeschnitten werden.

Gegenstand der Erfindung ist ein Verfahren zur Herstellung von Prepregs durch Aufbringen, bevorzugt durch Streuverfahren, der Komponente B) auf die Komponente A) gegebenenfalls Fixieren von B) bevorzugt durch Wärmeeinwirkung, besonders bevorzugt durch Ansintern.

Zur Konsolidierung der Prepreg-Lagen zu einem einzigen Composite (Bauteil) und zur Vernetzung des erfindungsgemäßen Matrixmaterials zur Matrix werden die Prepregs zugeschnitten, gegebenenfalls vernäht oder anderweitig fixiert und in einer geeigneten Form unter Druck und gegebenenfalls Anlegen von Vakuum verpresst. Im Rahmen dieser Erfindung erfolgt dieser Vorgang der Herstellung der Composites aus dem erfindungsgemäßen Prepregs je nach Aushärtungszeit bei Temperaturen von oberhalb von etwa 100 °C bis 160 °C.

Gegenstand der Erfindung ist auch die Verwendung der Prepregs, im Wesentlichen aufgebaut aus
A) mindestens einem Faser förmigen Träger
   und
B) mindestens einer hochreaktiven pulverförmigen Uretdiongruppen haltigen Polyurethanzusammensetzung als Matrixmaterial, im Wesentlichen enthaltend
   a) mindestens einen Uretdiongruppen haltigen Härter und
   b) optional mindestens ein Polymer mit gegenüber NCO-Gruppen reaktiven funktionellen Gruppen;
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
      und
   d) 0,1 bis 5 Gew.-% mindestens einen Co-Katalysator, ausgewählt aus
      d1) mindestens einem Epoxid und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe,
zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die aus den erfindungsgemäßen Prepregs hergestellten Composite-Bauteile,
im Wesentlichen aufgebaut aus
A) mindestens einem Faser förmigen Träger und
B) mindestens einer vernetzten Uretdiongruppen haltigen Polyurethanzusammensetzung der erfindungsgemäßen Zusammensetzung, als Matrix.

Gegenstand der Erfindung ist auch ein Verfahren zu Herstellung von Composite-Bauteilen, wobei ein Prepreg, aufgebaut aus
A) mindestens einem Faser förmigen Träger
   und
B) mindestens einer hochreaktiven pulverförmigen Uretdiongruppen haltigen Polyurethanzusammensetzung, als Matrixmaterial im Wesentlichen enthaltend
   a) mindestens einen Uretdiongruppen haltigen Härter
      und
   b) optional mindestens ein Polymer mit gegenüber NCO-Gruppen reaktiven funktionellen Gruppen
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion,
      und
   d) 0,1 bis 5 Gew.-% mindestens einem Co-Katalysator, ausgewählt aus
      d1) mindestens einem Epoxid
         und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe,
   bei Temperaturen von oberhalb 100 °C bis 160 °C, gegebenenfalls unter Anwendung von Druck und/oder Vakuum, hergestellt wird.

Nachfolgend wird die Erfindung durch Beispiele erläutert.

### Beispiele

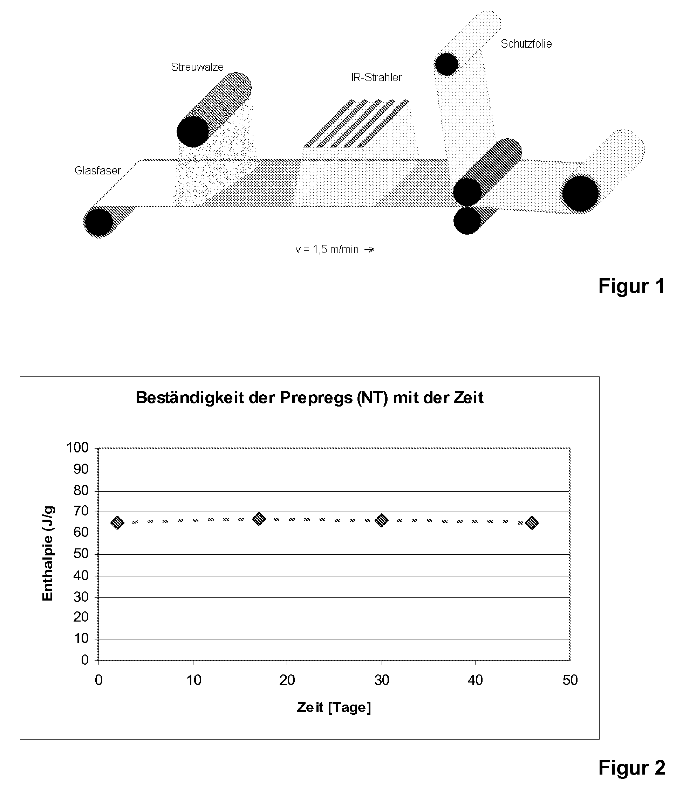

### Abbildung der verwendeten Laborstreueinrichtung (Villars Minicoater 200) Figur 1

### Verwendete Glasfasergelege/-gewebe:

Folgende Glasfasergelege/-gewebe wurden in den Beispielen verwendet, nachfolgend mit Typ I und Typ II bezeichnet.
Bei Typ I handelt es sich um ein Leinwand-E-Glas-Gewebe 281 L Art.Nr. 3103 der Firma "Schlösser & Cramer". Das Gewebe hat ein Flächengewicht von 280 g/m². Beim Typ II GBX 600 Art.Nr. 1023 handelt es sich um ein vernähtes biaxiales E-Glas-Gelege (-45/+45) der Firma "Schlösser & Cramer". Darunter sind zwei Lagen von Faserbündeln zu verstehen, die übereinander liegen und zueinander in einem Winkel von 90 Grad versetzt sind. Dieser Aufbau wird von weiteren Fasern zusammen gehalten, die allerdings nicht aus Glas bestehen. Die Oberfläche der Glasfasern ist mit einer Standardschlichte ausgestattet, die aminosilanmodifiziert ist. Das Gelege hat ein Flächengewicht von 600 g/m².

### DSC-Messungen

Die DSC-Untersuchungen (Glasübergangstemperatur-Bestimmungen und Reaktionsenthalpie-Messungen) wurden mit einem Mettler Toledo DSC 821 e nach DIN 53765 durchgeführt.

Hochreaktive pulverförmige Polyurethanzusammensetzung Es wurde eine hochreaktive pulverförmige Polyurethanzusammensetzung mit der folgenden Rezeptur zur Herstellung der Prepregs und der Composites verwendet. (Angaben in Gew.-%):

| **Beispiele** | **Formulierung NT (erfindungsgemäß)** |
|---|---|
| VESTAGON BF 9030 (uretdiongruppenhaltige Härterkomponente a)), Evonik Degussa | 33,04 |
| FINEPLUS PE 8078 VKRK20 (OHfunktionelle Polyesterharzkomponente b)), Firma DIC | 63,14 |
| BYK 361 N | 0,5 |
| Vestagon SC 5050, Tetraethylammoniumbenzoat enthaltender Katalysator c)), Evonik Degussa | 1,52 |
| Araldit PT 912, (Epoxy-Komponente d)), Huntsman | 1,80 |
| NCO : OH-Verhältnis | 1,4 : 1 |

Die zerkleinerten Einsatzstoffe aus der Tabelle werden in einem Vormischer innig vermischt und anschließend im Extruder bis maximal 130 °C homogenisiert. Nach dem Erkalten wird das Extrudat gebrochen und mit einer Stiftsmühle gemahlen. Die verwendeten Siebfraktionen hatten mittlere Partikeldurchmesser zwischen 63 und 100 µm.

Physikalische Eigenschaften

| | **NT-Pulver** |
|---|---|
| Tg[°C] | ca. 45 |
| Schmelzbereich [°C] | um 84 |
| Aushärtungstemperatur [°C] | 120-140 |
| Bruchdehnung der ausgehärteten Polyurethanmatrix [%] | 9 |
| E-Modul der ausgehärteten Polyurethanmatrix [MPa] | ca. 610 |
| Volumenschrumpf durch Vernetzung | < 0,2 % |
| Viskositäts-Minimum der unvernetzten Schmelze | 111 °C/330 Pa·s |

Durch die Auswahl geeigneter Sinterbedingungen während diverser Vorversuche erwiesen sich folgende Einstellungen bei der Herstellung der Prepregs am Minicoater als gut geeignet:
Es wurden etwa 150 g/Pulver auf einen Quadratmeter Glasfasergelege bei einer Bahngeschwindigkeit von ca. 1,2 m/min aufgetragen. Dies entspricht einer Schichtdicke von etwa 500 µm mit einer Standardabweichung von etwa 45 µm.

Bei einer Leistung der IR-Strahler von 560 W konnten so Prepregs bei Temperaturen zwischen 75 und 82 °C hergestellt werden, wobei die hochreaktive pulverförmige Polyurethanzusammensetzung angesintert wurde, wobei unerheblich war, ob die Pulver mit noch erkennbarer Pulverstruktur nur angesintert wurden, oder sich eine komplette Schmelze auf dem Glasfasergelege ergab, solange die Reaktivität der pulverförmigen Polyurethanzusammensetzung erhalten blieb.

### Lagerstabilität der Prepregs

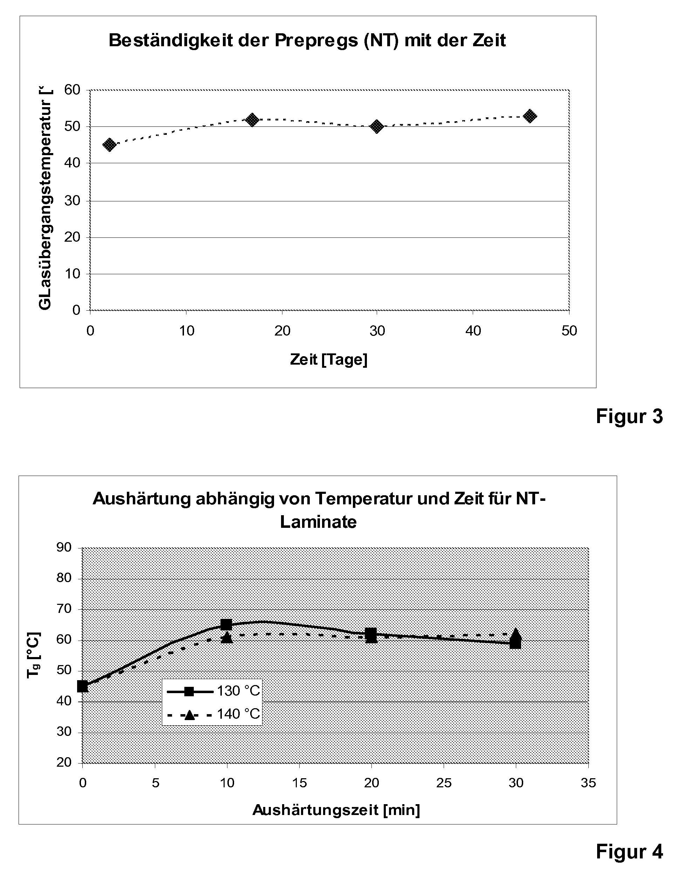

Die Lagerstabilität der Prepregs wurde anhand der Reaktionsenthalpien der Vernetzungsreaktion mittels DSC-Untersuchungen bestimmt. Die Ergebnisse sind in Figur 2 und Figur 3 dargestellt.

Die Vernetzungsfähigkeit der PU-Prepregs wird durch die Lagerung bei Raumtemperatur zumindest über einen Zeitraum von 7 Wochen nicht beeinträchtigt.

### Composite-Bauteil-Herstellung

Die Composite-Bauteile wurden über eine dem Fachmann bekannte Presstechnik auf einer Composite-Presse hergestellt. Die an der Streuanlage hergestellten, homogenen Prepregs wurden an einer Tischpresse zu Verbundwerkstoffen verpresst. Bei dieser Tischpresse handelt es sich um die Polystat 200 T der Firma Schwabenthan, mit der die Prepregs bei 130 bis 140 °C zu den entsprechenden Composite-Platten verpresst wurden. Der Druck wurde zwischen Normaldruck und 450 bar variiert. Dynamische Verpressungen, d. h. wechselnde Druckbeaufschlagungen können sich je nach Bauteil-Größe, -Dicke und Polyurethanzusammensetzung und damit der Viskositätseinstellung bei der Verarbeitungstemperatur für die Benetzung der Fasern als vorteilhaft erweisen.

In einem Beispiel wurde die Temperatur der Presse auf 135 °C gehalten, der Druck wurde nach einer Aufschmelzphase von 3 Minuten auf 440 bar erhöht und bis zur Entnahme des Composite-Bauteils aus der Presse nach 30 Minuten auf dieser Höhe gehalten.

Die erhaltenen harten, steifen, chemikalienbeständigen und schlagzähen Composite-Bauteile (Plattenware) mit einem Faservolumenanteil von > 50 % wurden hinsichtlich des Aushärtungsgrades (Bestimmung über DSC) untersucht. Die Bestimmung der Glastemperatur der ausgehärteten Matrix zeigt den Fortschritt der Vernetzung bei unterschiedlichen Härtungstemperaturen. Bei der verwendeten Polyurethanzusammensetzung ist nach ca. 25 Minuten die Vernetzung vollständig, wobei dann auch keine Reaktionsenthalpie für die Vernetzungsreaktion mehr detektierbar ist. Die Ergebnisse sind in Figur 4 dargestellt.

Zwei Verbundwerkstoffe wurden bei exakt gleichen Bedingungen hergestellt und anschließend deren Eigenschaften bestimmt und verglichen. Diese gute Reproduzierbarkeit der Eigenschaften konnte auch bei der Bestimmung der interlaminaren Scherfestigkeit (ILSF) bestätigt werden. Hier wurde bei einem Faservolumenanteil von 54 bzw. 57 % eine gemittelte ILSF von 44 N/mm² erreicht.

## Patentansprüche

1. Prepregs, im Wesentlichen aufgebaut aus
A) mindestens einem Faser förmigen Träger und
B) mindestens einer hochreaktiven pulverförmigen Uretdiongruppen haltigen Polyurethanzusammensetzung als Matrixmaterial, im Wesentlichen enthaltend
a) mindestens einen Uretdiongruppen haltigen Härter
und
b) optional mindestens ein Polymer mit gegenüber NCO-Gruppen reaktiven funktionellen Gruppen;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe.

2. Prepregs nach Anspruch 1,
wobei das Matrixmaterial einen Tg von mindestens 40 °C aufweist.

3. Prepregs nach mindestens einem der vorherigen Ansprüche,
**dadurch gekennzeichnet,**
**dass** Faser förmiges Material aus Glas, Kohlenstoff, Kunststoffen, wie Polyamind (Aramid) oder Polyester, Naturfasern, oder mineralischen Fasermaterialien wie Basaltfasern, oder keramische Fasern enthalten ist.

4. Prepregs nach mindestens einem der vorherigen Ansprüche,
**dadurch gekennzeichnet,**
**dass** als Faser förmiger Träger textile Flächengebilde aus Vlies, Maschenware, Gewirke und Gestricke, nicht maschige Gebinde wie Gewebe, Gelege oder Geflechte, als Langfaser- und Kurzfasermaterialien, enthalten sind.

5. Prepregs nach mindestens einem der vorherigen Ansprüche,
**dadurch gekennzeichnet,**
**dass** die pulverförmigen hochreaktiven Uretdiongruppen haltigen Polyurethanzusammensetzungen im Wesentlichen Mischungen aus einem funktionellen Gruppen aufweisenden Polymeren b) als Harz und Uretdiongruppen haltigen Di- oder Polyisocyanaten als Härter a) enthalten.

6. Prepregs nach mindestens einem der vorherigen Ansprüche,
**dadurch gekennzeichnet,**
**dass** Di- oder Polyisocyanate, ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), besonders bevorzugt IPDI, HDI, TMDI und H₁₂MDI, wobei auch die Isocyanurate einsetzbar sind, eingesetzt werden.

7. Prepregs nach mindestens einem der vorherigen Ansprüche,
im Wesentlichen aufgebaut aus
A) mindestens einem Faser förmigen Träger
und
B) mindestens einer hochreaktiven pulverförmigen Uretdiongruppen haltigen Polyurethanzusammensetzung als Matrixmaterial, im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40°C in fester Form und oberhalb von 125 °C in flüssiger Form vorliegt und einer OH-Zahl zwischen 20 und 200 mg KOH / Gramm;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,6 bis 0,9.

8. Prepregs nach mindestens einem der vorherigen Ansprüche, **dadurch gekennzeichnet,**
**dass** als Komponente c) Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Trimethylphenylammoniumethanolat, Triethylmethylammoniumethanolat, Trimethylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid, allgemein oder in Mischungen, enthalten sind.

9. Prepregs nach Anspruch 8
**dadurch gekennzeichnet,**
**dass** als Komponente c) Tetraethylammoniumbenzoat und/oder Tetrabutylammoniumhydroxid enthalten sind.

10. Prepregs nach mindestens einem der vorherigen Ansprüche
**dadurch gekennzeichnet,**
**dass** als Komponente d1) Glycidylether, Glycidylester, aliphatische Epoxide, Diglycidylether auf Basis Bisphenol A und Glycidylmethacrylate, allein oder in Mischungen, enthalten sind.

11. Prepregs nach Anspruch 10,
**dadurch gekennzeichnet,**
**dass** als Komponente d1) Triglycidylisocyanurat, Gemische aus Terephthalsäurediglycidylester und Trimelitsäuretriglycidylester, Glycidylester der Versaticsäure, 3,4-Epoxycyclohexylmethyl-3',4'-epoxycylohexancarboxylat (ECC), Diglycidylether auf Basis Bisphenol A) Ethylhexylglycidylether, Butylglycidylether, Pentaerythrittetraglycidylether, oder Polypoxtypen mit freien Epoxygruppen, allein oder in Mischungen, enthalten sind.

12. Prepregs nach mindestens einem der vorherigen Ansprüche,
**dadurch gekennzeichnet,**
**dass** als Komponente d2) Zinkacetylacetonat, Lithiumacetylacetonat und Zinnacetylacetonat, allein oder in Mischungen, enthalten sind.

13. Prepregs nach mindestens einem der vorherigen Ansprüche,
**dadurch gekennzeichnet,**
**dass** als Katalysator d2) Verbindungen ausgewählt aus Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat, allein oder in Mischungen, enthalten sind.

14. Prepregs nach Anspruch 13,
**dadurch gekennzeichnet,**
**dass** Tetraethylammoniumacetylacetonat und/oder Tetrabutylammoniumacetylacetonat enthalten sind.

15. Verfahren zur Herstellung von Prepregs nach mindestens einem der vorherigen Ansprüche 1 bis 14 durch Aufbringen, bevorzugt durch Streuverfahren, der Komponente B) auf die Komponente A), gegebenenfalls Fixieren von B) bevorzugt durch Wärmeeinwirkung, besonders bevorzugt durch Ansintern.

16. Verwendung der hochreaktiven pulverförmigen Polyurethanzusammensetzungen B) nach mindestens einem der Ansprüche 5 bis 14 zur Herstellung von Prepregs, insbesondere mit Faser förmigen Trägern aus Glas-, Kohle- oder Aramid-Fasern.

17. Verwendung der Prepregs nach mindestens einem der Ansprüche 1 bis 15, im Wesentlichen aufgebaut aus
A) mindestens einem Faser förmigen Träger
und
B) mindestens einer hochreaktiven pulverförmigen Polyurethanzusammensetzung als Matrixmaterial, im Wesentlichen enthaltend
a) mindestens einen Uretdiongruppen haltigen Härter
und
b) optional mindestens ein Polymer mit gegenüber NCO-Gruppen reaktiven funktionellen Gruppen;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe,
zur Herstellung von Composites im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

18. Composite-Bauteile,
im Wesentlichen aufgebaut aus
Prepregs nach einem der Ansprüche 1 bis 14.

19. Verfahren zur Herstellung von Composite-Bauteilen, wobei ein Prepreg nach mindestens einem der Ansprüche 1 bis 15,
im Wesentlichen aufgebaut aus
A) mindestens einem Faser förmigen Träger
und
B) mindestens einer hochreaktiven pulverförmigen, Uretdiongruppen haltigen Polyurethanzusammensetzung, als Matrixmaterial, im Wesentlichen enthaltend
a) mindestens einen Uretdiongruppen haltigen Härter
und
b) optional mindestens ein Polymer mit gegenüber NCO-Gruppen reaktiven funktionellen Gruppen;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe;
bei Temperaturen von oberhalb 100 bis 160 °C, gegebenenfalls unter Anwendung von Druck und/oder Vakuum, hergestellt wird.

## Claims

1. Prepregs essentially made up of
A) at least one fibrous support
and
B) at least one highly reactive powdery polyurethane composition containing uretdione groups, as matrix material, essentially containing
a) at least one curing agent containing uretdione groups
and
b) optionally at least one polymer with functional groups reactive towards NCO groups;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide and/or
d2) at least one metal acetylacetonate and/or quaternary ammonium acetylacetonate and/or quaternary phosphonium acetylacetonate;
e) optionally auxiliary substances and additives known from polyurethane chemistry.

2. Prepregs according to Claim 1, wherein the matrix material has a Tg of at least 40°C.

3. Prepregs according to at least one of the previous claims,
**characterized in that**
fibrous material of glass, carbon, plastics such as polyamide (aramid) or polyester, natural fibres or mineral fibre materials such as basalt fibres or ceramic fibres is contained.

4. Prepregs according to at least one of the previous claims,
**characterized in that**
planar textile bodies of non-woven material, knitted goods, such as hosiery and knitted fabrics, non-knitted skein such as fabric, non-woven or netting, as long fibre and short fibre materials, are contained as fibrous supports.

5. Prepregs according to at least one of the previous claims,
**characterized in that**
the powdery high reaction polyurethane compositions containing uretdione groups consist essentially of mixtures of, as resin, a polymer b) having functional groups and of, as curing agent a), di- or polyisocyanates containing uretdione groups.

6. Prepregs according to at least one of the previous claims,
**characterized in that** di- or polyisocyanates, selected from isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethyl-hexamethylene diisocyanate (TMDI) and/or norbornane diisocyanate (NBDI), particularly preferably IPDI, HDI, TMDI and H₁₂MDI, where the isocyanurates are also usable, are used.

7. Prepregs according to at least one of the previous claims essentially made up of
A) at least one fibrous support
and
B) at least one highly reactive powdery polyurethane composition containing uretdione groups as matrix material, essentially containing
a) at least one curing agent containing uretdione groups, based on polyaddition compounds from aliphatic, (cyclo)aliphatic or cycloaliphatic polyisocyanates containing uretdione groups and hydroxyl group-containing compounds, wherein the curing agent exists in solid form below 40°C and in liquid form above 125°C and has a free NCO content of less than 5 wt.% and a uretdione content of 3 - 25 wt.%,
b) at least one hydroxyl group-containing polymer, which exists in solid form below 40°C and in liquid form above 125°C and has an OH number between 20 and 200 mg KOH/gram;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide
and/or
d2) at least one metal acetylacetonate and/or quaternary ammonium acetylacetonate and/or quaternary phosphonium acetylacetonate;
e) optionally auxiliary substances and additives known from polyurethane chemistry,
so that the two components a) and b) are present in the ratio such that for every hydroxyl group of the component b) 0.3 to 1 uretdione group of the component a) is consumed, preferably 0.6 to 0.9.

8. Prepregs according to at least one of the preceding claims,
**characterized in that**
as component c), tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and tetrabutylammonium benzoate and tetrabutylphosphonium acetate, tetrabutylphosphonium formate and ethyltriphenylphosphonium acetate, tetrabutylphosphonium benzotriazolate, tetraphenylphosphonium phenolate and trihexyltetradecylphosphonium decanoate, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, methyltributylammonium methanolate, methyltriethylammonium methanolate, tetramethylammonium methanolate, tetraethylammonium methanolate, tetrapropylammonium methanolate, tetrabutylammonium methanolate, tetrapentylammonium methanolate, tetrahexylammonium methanolate, tetraoctylammonium methanolate, tetradecylammonium methanolate, tetradecyltrihexylammonium methanolate, tetraoctadecylammonium methanolate, benzyltrimethylammonium methanolate, benzyltriethylammonium methanolate, trimethylphenylammonium methanolate, triethylmethylammonium methanolate, trimethylvinylammonium methanolate, methyltributylammonium ethanolate, methyltriethylammonium ethanolate, tetramethylammonium ethanolate, tetraethylammonium ethanolate, tetrapropylammonium ethanolate, tetrabutylammonium ethanolate, tetrapentylammonium ethanolate, tetrahexylammonium ethanolate, tetraoctylammonium methanolate, tetradecylammonium ethanolate, tetradecyltrihexylammonium ethanolate, tetraoctadecylammonium ethanolate, benzyltrimethylammonium ethanolate, benzyltriethylammonium ethanolate, trimethylphenylammonium ethanolate, triethylmethylammonium ethanolate, trimethylvinylammonium ethanolate, methyltributylammonium benzylate, methyltriethylammonium benzylate, tetramethylammonium benzylate, tetraethylammonium benzylate, tetrapropylammonium benzylate, tetrabutylammonium benzylate, tetrapentylammonium benzylate, tetrahexylammonium benzylate, tetraoctylammonium benzylate, tetradecylammonium benzylate, tetradecyltrihexylammonium benzylate, tetraoctadecylammonium benzylate, benzyltrimethylammonium benzylate, benzyltriethylammonium benzylate, trimethylphenylammonium benzylate, triethylmethylammonium benzylate, trimethylvinylammonium benzylate, tetramethylammonium fluoride, tetraethylammonium fluoride, tetrabutylammonium fluoride, tetraoctylammonium fluoride, benzyltrimethylammonium fluoride, tetrabutylphosphonium hydroxide, tetrabutylphosphonium fluoride, tetrabutylammonium chloride, tetrabutylammonium bromide, tetrabutylammonium iodide, tetraethylammonium chloride, tetraethylammonium bromide, tetraethylammonium iodide, tetramethylammonium chloride, tetramethylammonium bromide, tetramethylammonium iodide, benzyltrimethylammonium chloride, benzyltriethylammonium chloride, benzyltripropylammonium chloride, benzyltributylammonium chloride, methyltributylammonium chloride, methyltripropylammonium chloride, methyltriethylammonium chloride, methyltriphenylammonium chloride, phenyltrimethylammonium chloride, benzyltrimethylammonium bromide, benzyltriethylammonium bromide, benzyltripropylammonium bromide, benzyltributylammonium bromide, methyltributylammonium bromide, methyltripropylammonium bromide, methyltriethylammonium bromide, methyltriphenylammonium bromide, phenyltrimethylammonium bromide, benzyltrimethylammonium iodide, benzyltriethylammonium iodide, benzyltripropylammonium iodide, benzyltributylammonium iodide, methyltributylammonium iodide, methyltripropylammonium iodide, methyltriethylammonium iodide, methyltriphenylammonium iodide and phenyltrimethylammonium iodide, methyltributylammonium hydroxide, methyltriethylammonium hydroxide, tetramethylammonium hydroxide, tetraethylammonium hydroxide, tetrapropylammonium hydroxide, tetrabutyl-ammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride and benzyltrimethylammonium fluoride are present, in general terms or in mixtures.

9. Prepregs according to Claim 8
**characterized in that**
as component c), tetraethylammonium benzoate and/or tetrabutylammonium hydroxide is/are present.

10. Prepregs according to at least one of the preceding claims,
**characterized in that**
as component d1), glycidyl ethers, glycidyl esters, aliphatic epoxides, diglycidyl ethers based on bisphenol A and glycidyl methacrylates are present, alone or in mixtures.

11. Prepregs according to Claim 10,
**characterized in that**
as component d1), triglycidyl isocyanurate, mixtures made of diglycidyl terephthalate and triglycidyl trimellitate, glycidyl esters of Versatic acid, 3,4-epoxycyclohexylmethyl 3',4'-epoxycyclohexanecarboxylate (ECC), diglycidyl ethers based on bisphenol A ethylhexyl glycidyl ether, butyl glycidyl ether, pentaerythritol tetraglycidyl ether, or Polypox grades having free epoxy groups are present, alone or in mixtures.

12. Prepregs according to at least one of the precding claims,
**characterized in that**
as component d2), zinc acetylacetonate, lithium acetylacetonate and tin acetylacetonate are present, alone or in mixtures.

13. Prepregs according to at least one of the preceding claims,
**characterized in that**
as catalyst d2), compounds selected from tetramethylammonium acetylacetonate, tetraethylammonium acetylacetonate, tetrapropylammonium acetylacetonate, tetrabutylammonium acetylacetonate, benzyltrimethylammonium acetylacetonate, benzyltriethylammonium acetylacetonate, tetramethylphosphonium acetylacetonate, tetraethylphosphonium acetylacetonate, tetrapropylphosphonium acetylacetonate, tetrabutylphosphonium acetylacetonate, benzyltrimethylphosphonium acetylacetonate, and benzyltriethylphosphonium acetylacetonate, are present, alone or in mixtures.

14. Prepregs according to Claim 13,
**characterized in that**
tetraethylammonium acetylacetonate and/or tetrabutylammonium acetylacetonate is/are present.

15. Process for producing prepregs according to at least one of the preceding Claims 1 to 14 by applying, preferably by scattering processes, component B) to component A), and optionally fixing B), preferably by exposure to heat, particularly preferably by incipient sintering.

16. Use of the highly reactive powdery polyurethane compositions B) according to at least one of Claims 5 to 14, for the production of prepregs, in particular with fibrous supports of glass, carbon or aramid fibres.

17. Use of the prepregs according to at least one of Claims 1 to 15,
essentially made up of
A) at least one fibrous support
and
B) at least one highly reactive powdery polyurethane composition as matrix material, essentially containing
a) at least one curing agent containing uretdione groups
and
a) optionally at least one polymer with functional groups reactive towards NCO groups;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide and/or
d2) at least one metal acetylacetonate and/or quaternary ammonium acetylacetonate and/or quaternary phosphonium acetylacetonate;
e) optionally auxiliary substances and additives known from polyurethane chemistry,
for the production of composites in boat and shipbuilding, in aerospace technology, in automobile manufacture, and for bicycles, preferably motorcycles and cycles, and in the sectors automotive, construction, medical engineering, sport, electrical and electronics industry, and power generating plants, e.g. for rotor blades in wind power plants.

18. Composite components, essentially made up of prepregs according to one of Claims 1 to 14.

19. Process for the production of composite components, where a prepreg according to at least one of Claims 1 to 15,
essentially made up of
A) at least one fibrous support
and
B) at least one highly reactive powdery polyurethane compositon containing uretdione groups, as matrix material, essentially containing
a) at least one curing agent containing uretdione groups
and
b) optionally at least one polymer with functional groups reactive towards NCO groups;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide and/or
d2) at least one metal acetylacetonate and/or quaternary ammonium acetylacetonate and/or quaternary phosphonium acetylacetonate;
e) optionally auxiliary substances and additives known from polyurethane chemistry,
is produced at temperatures of more than 100 up to 160°C, optionally with the use of pressure and/or vacuum.

## Revendications

1. Préimprégnés, constitués essentiellement de :
A) au moins un support en forme de fibres
et
B) au moins une composition polyuréthane en poudre hautement réactive contenant des groupes uretdiones comme substance matrice, contenant essentiellement :
a) au moins un agent de réticulation contenant des groupes uretdiones, et
b) facultativement au moins un polymère avec des groupes fonctionnels réactifs vis-à-vis des groupes NCO ;
c) entre 0,1 et 5 % en poids d'au moins un catalyseur choisi parmi des sels d'ammonium quaternaire et/ou des sels de phosphonium quaternaire avec des halogènes, hydroxydes, alcoolates ou anions d'acide organique ou minéral comme contre-ion ;
et
d) entre 0,1 et 5 % en poids d'au moins un cocatalyseur choisi parmi
d1) au moins un époxyde, et/ou
d2) au moins un acétylacétonate métallique et/ou un acétylacétonate d'ammonium quaternaire et/ou un acétylacétonate de phosphonium quaternaire ;
e) éventuellement des additifs et auxiliaires connus issus de la chimie des polyuréthanes.

2. Préimprégnés selon la revendication 1, dans lequel la substance matrice présente une Tg d'au moins 40°C.

3. Préimprégnés selon au moins une des revendications précédentes, **caractérisés en ce qu'**ils contiennent un matériau en forme de fibres constitué de verre, de carbone, de plastiques comme un polyamide (aramide) ou un polyester, des fibres naturelles ou des matériaux fibreux minéraux comme des fibres de basalte ou des fibres céramiques.

4. Préimprégnés selon au moins une des revendications précédentes, **caractérisés en ce qu'**ils contiennent comme supports en forme de fibres des tissus plats textiles en non-tissé, tissu à mailles et tricot, des emballages non réticulés comme en tissu, en canevas ou tressés, comme matériaux à fibres longues et courtes.

5. Préimprégnés selon au moins une des revendications précédentes, **caractérisés en ce que** les compositions polyuréthanes en poudre hautement réactives contenant des groupes uretdiones contiennent essentiellement des mélanges d'un polymère b) présentant des groupes fonctionnels comme résine et des di- ou polyisocyanates a) contenant des groupes uretdiones comme agent réticulant.

6. Préimprégnés selon au moins une des revendications précédentes, **caractérisés en ce que** sont utilisés des di- ou polyisocyanates choisis parmi le diisocyanate d'isophorone (IPDI), le diisocyanate d'hexaméthylène (HDI), le diisocyanatodicyclohexylméthane (H₁₂MDI), le diisocyanate de 2-méthylpentane (MPDI), le diisocyanate de 2,2,4-triméthylhexaméthylène / diisocyanate de 2,4,4,-triméthylhexaméthylène (TMDI) et/ou le diisocyanate de norbornane (NBDI), particulièrement préférentiellement IPDI, HDI, TMDI et H₁₂MDI, les isocyanurates étant également utilisables.

7. Préimprégnés selon au moins une des revendications précédentes, essentiellement constitués de :
A) au moins un support en forme de fibres
et
B) au moins une composition polyuréthane contenant des groupes uretdiones en poudre hautement réactive comme substance matrice, contenant essentiellement :
a) au moins un agent de réticulation contenant des groupes uretdiones, à base de composés de polyaddition de polyisocyanates contenant des groupes uretdiones aliphatiques, (cyclo)aliphatiques ou cycloaliphatiques et de composés contenant des groupes hydroxyles, l'agent de réticulation étant sous forme solide en dessous de 40°C et sous forme liquide au-dessus de 125°C, et présentant une teneur en NCO libres inférieure à 5 % en poids et une teneur en uretdione entre 3 et 25 % en poids ;
b) au moins un polymère contenant de groupes hydroxyles, étant sous forme solide en dessous de 40°C et sous forme liquide au-dessus de 125°C, et ayant un indice d'hydroxyde entre 20 et 200 mg KOH / g ;
c) entre 0,1 et 5 % en poids d'au moins un catalyseur choisi parmi des sels d'ammonium quaternaire et/ou des sels de phosphonium quaternaire avec des halogènes, hydroxydes, alcoolates ou anions d'acide organique ou minéral comme contre-ion ;
et
d) entre 0,1 et 5 % en poids d'au moins un co-catalyseur choisi parmi
d1) au moins un époxyde et/ou
d2) au moins un acétylacétonate métallique et/ou un acétylacétonate d'ammonium quaternaire et/ou un acétylacétonate de phosphonium quaternaire ;
e) éventuellement des additifs et auxiliaires connus issus de la chimie des polyuréthanes,
de sorte que les deux composants a) et b) soient présents dans un rapport tel qu'à chaque groupe hydroxyle des composants b) corresponde de 0,3 à 1 groupe uretdione des composants a), préférentiellement de 0,6 à 0,9.

8. Préimprégnés selon au moins une des revendications précédentes, **caractérisés en ce qu'**ils contiennent comme composants c) : formiate de tétraméthylammonium, acétate de tétraméthylammonium, propionate de tétraméthylammonium, butyrate de tétraméthylammonium, benzoate de tétraméthylammonium, formiate de tétraéthylammonium, acétate de tétraéthylammonium, propionate de tétraéthylammonium, butyrate de tétraéthylammonium, benzoate de tétraéthylammonium, formiate de tétrapropylammonium, acétate de tétrapropylammonium, propionate de tétrapropylammonium, butyrate de tétrapropylammonium, benzoate de tétrapropylammonium, formiate de tétrabutylammonium, acétate de tétrabutylammonium, propionate de tétrabutylammonium, butyrate de tétrabutylammonium, benzoate de tétrabutylammonium, acétate de tétrabutylphosphonium, formiate de tétrabutylphosphonium, acétate d'éthyltriphénylphosphonium, benzotriazolate de tétrabutylphosphonium, phénolate de tétraphénylphosphonium, décanoate de méthyltriéthylammonium, hydroxyde de méthyltributylammonium, hydroxyde de tétraéthylammonium, hydroxyde de tétrapropylammonium, hydroxyde de tétrabutylammonium, hydroxyde de tétrapentylammonium, hydroxyde de tétrahexylammonium, hydroxyde de tétraoctylammonium, hydroxyde de tétradécylammonium, hydroxyde de tétradécyltrihexylammonium, hydroxyde de tétraoctadécylammonium, hydroxyde de benzyltriméthylammonium, hydroxyde de benzyltriéthylammonium, hydroxyde de triméthylphénylammonium, hydroxyde de triéthylméthylammonium, hydroxyde de triméthylvinylammonium, méthanoate de méthyltributylammonium, méthanoate de méthyltriéthylammonium, méthanoate de tétraméthylammonium, méthanoate de tétraéthylammonium, méthanoate de tétrapropylammonium, méthanoate de tétrabutylammonium, méthanoate de tétrapentylammonium, méthanoate de tétrahexylammonium, méthanoate de tétraoctylammonium, méthanoate de tétradécylammonium, méthanoate de tétradécyltrihexylammonium, méthanoate de tétraoctadécylammonium, méthanoate de benzyltriméthylammonium, méthanoate de benzyltriéthylammonium, méthanoate de triméthylphénylammonium, méthanoate de triéthylméthylammonium, méthanoate de triméthylvinylammonium, éthanoate de méthyltributylammonium, éthanoate de méthyltriéthylammonium, éthanoate de tétraméthylammonium, éthanoate de tétraéthylammonium, éthanoate de tétrapropylammonium, éthanoate de tétrabutylammonium, éthanoate de tétrapentylammonium, éthanoate de tétrahexylammonium, éthanoate de tétraoctylammonium, éthanoate de tétradécylammonium, éthanoate de tétradécyltrihexylammonium, éthanoate de tétraoctadécylammonium, éthanoate de benzyltriméthylammonium, éthanoate de benzyltriéthylammonium, éthanoate de triméthylphénylammonium, éthanoate de triéthylméthylammonium, éthanoate de triméthylvinylammonium, benzylate de méthyltributylammonium, benzylate de méthyltriéthylammonium, benzylate de tétraméthylammonium, benzylate de tétraéthylammonium, benzylate de tétrapropylammonium, benzylate de tétrabutylammonium, benzylate de tétrapentylammonium, benzylate de tétrahexylammonium, benzylate de tétraoctylammonium, benzylate de tétradécylammonium, benzylate de tétradécyltrihexylammonium, benzylate de tétraoctadécylammonium, benzylate de benzyltriméthylammonium, benzylate de benzyltriéthylammonium, benzylate de triméthylphénylammonium, benzylate de triéthylméthylammonium, benzylate de triméthylvinylammonium, fluorure de tétraméthylammonium, fluorure de tétraéthylammonium, fluorure de tétrabutylammonium, fluorure de tétraoctylammonium, fluorure de benzyltriméthylammonium, hydroxyde de tétrabutylphosphonium, fluorure de tétrabutylphosphonium, chlorure de tétrabutylammonium, bromure de tétrabutylammonium, iodure de tétrabutylammonium, chlorure de tétraéthylammonium, bromure de tétraéthylammonium, iodure de tétraéthylammonium, chlorure de tétraméthylammonium, bromure de tétraméthylammonium, iodure de tétraméthylammonium, chlorure de benzyltriméthylammonium, chlorure de benzyltriéthylammonium, chlorure de benzyltripropylammonium, chlorure de benzyltributylammonium, chlorure de méthyltributylammonium, chlorure de méthyltripropylammonium, chlorure de méthyltriéthylammonium, chlorure de méthyltriphénylammonium, chlorure de phényltriméthylammonium, bromure de benzyltriméthylammonium, bromure de benzyltriéthylammonium, bromure de benzyltripropylammonium, bromure de benzyltributylammonium, bromure de méthyltributylammonium, bromure de méthyltripropylammonium, bromure de méthyltriéthylammonium, bromure de méthyltriphénylammonium, bromure de phényltriméthylammonium, iodure de benzyltriméthylammonium, iodure de benzyltriéthylammonium, iodure de benzyltripropylammonium, iodure de benzyltributylammonium, iodure de méthyltributylammonium, iodure de méthyltripropylammonium, iodure de méthyltriéthylammonium, iodure de méthyltriphénylammonium, iodure de phényltriméthylammonium, hydroxyde de méthyltributylammonium, hydroxyde de méthyltriéthylammonium, hydroxyde de tétraméthylammonium, hydroxyde de tétraéthylammonium, hydroxyde de tétrapropylammonium, hydroxyde de tétrabutylammonium, hydroxyde de tétrapentylammonium, hydroxyde de tétrahexylammonium, hydroxyde de tétraoctylammonium, hydroxyde de tétradécylammonium, hydroxyde de tétradécyltrihexylammonium, hydroxyde de tétraoctadécylammonium, hydroxyde de benzyltriméthylammonium, hydroxyde de benzyltriéthylammonium, hydroxyde de triméthylphénylammonium, hydroxyde de triéthylméthylammonium, hydroxyde de triméthylvinylammonium, fluorure de tétraméthylammonium, fluorure de tétraéthylammonium, fluorure de tétrabutylammonium, fluorure de tétraoctylammonium et fluorure de benzyltriméthylammonium, en général ou en mélanges.

9. Préimprégnés selon la revendication 8, **caractérisés en ce qu'**ils contiennent comme composants c) du benzoate de tétraéthylammonium et/ou de l'hydroxyde de tétrabutylammonium.

10. Préimprégnés selon au moins une des revendications précédentes, **caractérisés en ce qu'**ils contiennent comme composants d1) un éther de glycidyle, un ester de glycidyle, des époxydes aliphatiques, un éther de diglycidyle à base de bisphénol A et de méthacrylate de glycidyle, seul ou en mélanges.

11. Préimprégnés selon la revendication 10, **caractérisés en ce qu'**ils contiennent comme composants d1) de l'isocyanurate de triglycidyle, des mélanges de téréphtalate de diglycidyle et de trimélitate de triglycidyle, de versatate de glycidyle, de 3',4'-époxycyclohexanecarboxylate de 3,4-époxycyclohexylméthyle (ECC), d'éther de diglycidyle à base de bisphénol A, d'éthylhexylglycidyléther, de butylglycidyléther, de pentaérythritotétraglycidyléther, ou de polymères polyépoxydes comportant des groupes époxydes libres, seul ou en mélanges.

12. Préimprégnés selon au moins une des revendications précédentes, **caractérisés en ce qu'**ils contiennent comme composants d2) de l'acétylacétonate de zinc, de l'acétylacétonate de lithium et de l'acétylacétonate d'étain, seul ou en mélanges.

13. Préimprégnés selon au moins une des revendications précédentes, **caractérisés en ce qu'**ils contiennent comme catalyseur d2) des composés choisis parmi l'acétylacétonate de tétraméthylammonium, l'acétylacétonate de tétraéthylammonium, l'acétylacétonate de tétrapropylammonium, l'acétylacétonate de tétrabutylammonium, l'acétylacétonate de benzyltriméthylammonium, l'acétylacétonate de benzyltriéthylammonium, l'acétylacétonate de tétraméthylphosphonium, l'acétylacétonate de tétraéthylphosphonium, l'acétylacétonate de tétrapropylphosphonium, l'acétylacétonate de tétrabutylphosphonium, l'acétylacétonate de benzyltriméthylphosphonium, l'acétylacétonate de benzyltriéthylphosphonium, seul ou en mélanges.

14. Préimprégnés selon la revendication 13, **caractérisés en ce qu'**ils contiennent de l'acétylacétonate de tétraéthylammonium et/ou de l'acétylacétonate de tétrabutylammonium.

15. Procédé de fabrication de préimprégnés selon au moins une des revendications 1 à 14 par application, préférentiellement par saupoudrage, des composants B) sur les composants A), éventuellement par fixation de B) préférentiellement par action de la chaleur, particulièrement préférentiellement par frittage partiel.

16. Utilisation des compositions polyuréthanes en poudre hautement réactives B) selon au moins une des revendications 5 à 14 pour la fabrication de préimprégnés, en particulier de préimprégnés avec des supports en forme de fibres de verre, de carbone ou d'aramide.

17. Utilisation de préimprégnés selon au moins une des revendications 1 à 15, constitués essentiellement de :
A) au moins un support en forme de fibres
et
B) au moins une composition polyuréthane en poudre hautement réactive comme matériau matrice, contenant essentiellement
a) au moins un agent de réticulation contenant des groupes uretdiones, et
b) facultativement au moins un polymère avec des groupes fonctionnels réactifs vis-à-vis des groupes NCO ;
c) entre 0,1 et 5 % en poids d'au moins un catalyseur choisi parmi des sels d'ammonium quaternaire et/ou des sels de phosphonium quaternaire avec des halogènes, hydroxydes, alcoolates ou anions d'acide organique ou minéral comme contre-ion ;
et
d) entre 0,1 et 5 % en poids d'au moins un co-catalyseur choisi parmi
d1) au moins un époxyde, et/ou
d2) au moins un acétylacétonate métallique et/ou un acétylacétonate d'ammonium quaternaire et/ou un acétylacétonate de phosphonium quaternaire ;
e) éventuellement des additifs et auxiliaires connus issus de la chimie des polyuréthanes,
pour la fabrication de composites dans la construction navale, dans la technologie du transport aérien et aérospatial, dans la construction automobile, pour les deux-roues, préférentiellement les motos et bicyclettes, dans les domaines de l'automatisation, de la construction, de la technologie médicale, du sport, de l'industrie électrique et électronique, dans les centrales de production d'énergie, comme les pales des éoliennes.

18. Pièces de construction composites, essentiellement constituées de préimprégnés selon une des revendications 1 à 14.

19. Procédé de fabrication de pièces de construction composites, dans lequel on fabrique un préimprégné constitué essentiellement de :
A) au moins un support en forme de fibres
et
B) au moins une composition polyuréthane en poudre hautement réactive comme matériau matrice, contenant essentiellement
a) au moins un agent de réticulation contenant des groupes uretdiones, et
b) facultativement au moins un polymère avec des groupes fonctionnels réactifs vis-à-vis des groupes NCO ;
c) entre 0,1 et 5 % en poids d'au moins un catalyseur choisi parmi des sels d'ammonium quaternaire et/ou des sels de phosphonium quaternaire avec des halogènes, hydroxydes, alcoolates ou anions d'acide organique ou minéral comme contre-ion ;
et
d) entre 0,1 et 5 % en poids d'au moins un co-catalyseur choisi parmi
d1) au moins un époxyde, et/ou
d2) au moins un acétylacétonate métallique et/ou un acétylacétonate d'ammonium quaternaire et/ou un acétylacétonate de phosphonium quaternaire ;
e) éventuellement des additifs et auxiliaires connus issus de la chimie des polyuréthanes,
à des températures supérieures à 100 jusqu'à 160°C, éventuellement sous pression et/ou sous vide.
